# EUROPEAN PATENT APPLICATION

(11) **EP 4 527 694 A1**
(43) Date of publication of application: **26.03.2025**
(21) Application number: 23198986.4
(22) Date of filing: 22.09.2023
(51) Int. Cl.: B60R 1/00

(54) **DRIVING ASSISTANCE METHOD, DRIVING ASSISTANCE SYSTEM AND VEHICLE**

(71) Applicant: ZF CV Systems Global GmbH, 3006 Bern (CH)
(72) Inventor: Huang, Lei, 30853 Langenhagen (DE); Bertolina, Guillermo, 1150 Woluwe-Saint-Pierre (BE); Magalhaes Pereira, Rodrigo, 86165 Augsburg (DE); Kurt, Nahit Yusuf, 30173 Hannover (DE); Ehlers, Arne, 30449 Hannover (DE)
(74) Representative: Schäferjohann, Volker

(57) **Abstract**

The invention relates to a driving assistance method (100) for a vehicle (200), in particular for a commercial vehicle (200), comprising:
- providing a first side view camera (20) configured to capture images (21) on a first side (210) of the vehicle (200) (110);
- providing a second side view camera (30) configured to capture images (31) on a second side (220) of the vehicle (200) (120);
- providing a first display system (40) arranged within a vehicle cabin (230) of the vehicle (200), the first display system (40) being configured to receive images (21, 31) captured by the first side view camera (20) and by the second side view camera (30) (130);
- displaying the images (21) captured by the first side view camera (20) on a first display section (41) of the first display system (40) (131); and
- displaying the images (31) captured by the second side view camera (30) on a second display section (42) of the first display system (40) (132).

Furthermore, the invention relates to a driving assistance system (10) for a vehicle (200) and to a vehicle (200).

## Description

The invention relates to a driving assistance method and to a driving assistance system for a vehicle, in particular for a commercial vehicle. Furthermore, the invention relates to a vehicle, in particular a commercial vehicle, comprising a driving assistance system.

It is commonly known to use driving assistance methods and systems, also called advanced driver-assistance systems (ADAS), for supporting vehicle drivers with the operation of the vehicle in terms of safety, efficiency and comfort. Driving assistance methods and systems may use sensor technology for providing technical and operational information to the driver or for automated driving interventions, for instance in order to avoid collisions.

It is known from the prior art to use vehicle cameras as optical sensors for providing an enhanced overview for the driver by additional fields of view, for instance regarding the vehicle environment or the vehicle interior. For example, US 2022 / 0 083 794 A1 discloses a camera monitoring system for motor vehicles, wherein an image capturing device is provided on a mounting assembly of the vehicle for an exterior field of view extending sideward and rearward outside the vehicle. In US 2013 / 0 155 236 A1, it is suggested to mount a camera to a side view mirror of a vehicle and to display the rear image captured by the camera on a screen monitor positioned inside the vehicle.

Furthermore, it is known from the prior art to display camera images in combination with additional driving assistance information. By this, the driver may simultaneously perceive a camera image and the provided driving assistance information. For instance, US 2022 / 0 032 945 A1 discloses a method comprising detecting a potential external threat, determining a severity level and a location of the potential threat and displaying an indication of the potential threat on an electronic display, e.g. a camera mirror replacement display.

However, the technology still holds potential for optimization regarding improved safety and comfort for a driver driving the vehicle.

It is an object of the invention to provide enhanced driving assistance methods and systems which allow for an improved evaluation of driving situations.

According to a first aspect of the present invention, it is suggested to provide a driving assistance method for a vehicle, in particular for a commercial vehicle, the method comprising:
- providing a first side view camera configured to capture images on a first side of the vehicle;
- providing a second side view camera configured to capture images on a second side of the vehicle;
- providing a first display system arranged within a vehicle cabin of the vehicle, the first display system being configured to receive images captured by the first side view camera and by the second side view camera;
- displaying the images captured by the first side view camera on a first display section of the first display system; and
- displaying the images captured by the second side view camera on a second display section of the first display system.

By the suggested driving assistance method, the driver may benefit from a combined side view displaying technology which allows to simultaneously or quasi-simultaneously perceive different vehicle side views from a single display system. By displaying the images captured by the first and second side view cameras on the same first display system, spatially concentrated image data is provided to the driver, thus enabling the driver to perform fast evaluation of the driving situation on the first and second vehicle sides with less eye or head movement. Hence, fast driver reactions to critical driving situations can be promoted, resulting in an improved safety level. The suggested driving assistance method may be particularly advantageous for driving situations requiring increased attention by the driver, as e.g. for overtaking maneuvers or reversing. Furthermore, as the first display system is arranged within the vehicle cabin, the images can be displayed close to the driver, thus facilitating perception of the displayed information. As a consequence, safety, effectiveness and comfort may be increased by the suggested driving assistance method.

The described vehicle may be a motor vehicle of any type designed to transport people and/or cargo. In particular, the vehicle may be a commercial vehicle as e.g. a truck or a bus. For commercial vehicles, the advantages of the disclosed driving assistance method may have an increased effect since commercial vehicles commonly comprise particular structures and dimensions which require increased driver attention for the vehicle environment and at the same time present challenging side view limitations due to their side lengths. Hence, the present invention may be beneficially applicable to commercial vehicles.

The described first and second side view cameras may represent optical sensor devices of the disclosed driving assistance method and system. The cameras may acquire and process still images and/or video data, thus selectively providing a periodic and/or continuous image stream. The side view cameras are configured to capture images on the first and second side of the vehicle for monitoring the vehicle's environment and/or the vehicle's exterior on the first and second side. The first and second sides of the vehicle may in particular refer to vehicle sides being opposite to each other. Preferably, the first and second sides refer to lateral vehicle sides extending between the rear and the front of the vehicle. For instance, the side view cameras may be mounted at suitable positions for providing lateral fields of view. Furthermore, it may be advantageous to mount the side view cameras at suitable positions which allow for combined lateral and rear views, such that the captured images not only represent the vehicle's environment but also, at least partially, the vehicle exterior on the monitored vehicle side. For instance, suitable camera mounting positions may comprise a side center of the vehicle or positions next to the driver's vehicle cabin, e.g. close to the side mirrors or side windows of the vehicle cabin.

The described first display system may comprise an electronic visual display, also called screen, which is configured to represent electronically transmitted image or video data. The first display system may be connected to the first and second side view cameras by means of a suitable signal path, which may be provided by a wired or wireless signal connection. Optionally, the first display system may comprise or be connected to a suitable image processor for processing the captured images in a predefined manner. According to various embodiments, the described first and second display sections of the first display system may be assigned to a single display or to separate displays. For instance, the first display system may comprise a single display with a first and a second display section. By this, the first and second display sections are jointly displayed on the same screen but separated electronically. Alternatively, the first display system may comprise first and second displays positioned adjacent to each other, thus providing structurally separated display sections. This type of display system with structurally separated display sections may be also called split screen.

According to an advantageous embodiment, the method further comprises:
- providing a second display system arranged within the vehicle cabin, the second display system being configured to receive images captured by the first side view camera and by the second side view camera;
- displaying the images captured by the second side view camera on a first display section of the second display system; and
- displaying the images captured by the first side view camera on a second display section of the second display system.

By this, a further display system is provided which beneficially improves the driver's overview. Thus, the driver may selectively use the first or second display system for image inspection. The described second display system may be configured equal or similar to the first display system. The described second display system may comprise an electronic visual display, also called screen, which is configured to represent electronically transmitted image or video data. According to various embodiments, the described first and second display sections of the second display system may be assigned to a single display or to separate displays. For instance, the second display system may comprise a single display with a first and a second display section. By this, the first and second display sections are jointly displayed on the same screen but separated electronically. Alternatively, the second display system may comprise first and second displays positioned adjacent to each other, thus providing structurally separated display sections.

The first and second display systems may be spaced apart. For instance, the first display system may be closer to the first side of the vehicle than the second display system and the second display system may be closer to the second side of the vehicle than the first display system. Thus, the first display system may be assigned to the first side of the vehicle and the second display system may be assigned to the second side of the vehicle. Images of the first side of the vehicle captured by means of the first side view camera may be displayed on the first display section of the assigned first display system. Images of the second side of the vehicle captured by means of the second side view camera may be displayed on the first display section of the assigned second display system. In conclusion, images of the first or second vehicle may be advantageously displayed on the first display sections of the assigned display systems. Consequently, images of the opposite vehicle side may be advantageously displayed on the second display sections.

For instance, the first display system may be advantageously arranged on or adjacent to a first A-pillar of the vehicle facing the first side of the vehicle. The second display system may be advantageously arranged on or adjacent to a second A-pillar of the vehicle facing the second side of the vehicle. Thus, the first and second display systems may be arranged at opposite A-pillars. As a consequence, it may be easier for the driver to combine the inspection of the provided side view images with a respective window glance. The described A-pillar may form a vertical vehicle strut at a vehicle front, e.g. framing a front screen of the vehicle. The A-pillars provide a suitable position for intuitive side view inspection by the driver, since it usually has been common to provide side mirrors next to the A-pillars. Furthermore, the positions at the A-pillars ensure reduced coverage of and reduced interference with the driver's main view through the front screen by the displayed images. In addition, the driver does not have to look down, as it may be the case with console-implemented displays, for instance. As a consequence, safety, effectiveness and comfort may be increased by the suggested embodiment.

According to an advantageous embodiment, the first display section comprises a larger display size compared to the second display section. The advantageous embodiment may apply to the first display system and/or to the second display system. A higher display size may, for instance, correspond to a larger screen diagonal or a larger screen area. By providing different display sizes for the first and second display section, a predefined side view displayed on the larger display section may be emphasized, thus promoting the driver's focus and allowing for intuitive understanding of which of the side views is displayed in the considered display section. For instance, the first display system may be assigned to the first side of the vehicle and images of the first side of the vehicle captured by means of the first side view camera may be displayed on the larger first display section of the assigned first display system. For instance, the second display system may be assigned to the second side of the vehicle and images of the second side of the vehicle captured by means of the second side view camera may be displayed on the larger first display section of the assigned second display system.

According to an advantageous embodiment, the second display section is arranged under the first display section in the direction of gravity. In other words, the second display section may be arranged closer to the ground in a normal use orientation of the vehicle. The advantageous embodiment may apply to the first display system and/or to the second display system. Due to conventional reading directions, information on the higher first display section and on the lower second display section may be chronologically observed. Hence, a predefined side view displayed on the higher display section may be emphasized, thus promoting the driver's focus and allowing for intuitive understanding of which of the side views is displayed in the considered display section. For instance, the first display system may be assigned to the first side of the vehicle and images of the first side of the vehicle captured by means of the first side view camera may be displayed on the higher first display section of the assigned first display system. For instance, the second display system may be assigned to the second side of the vehicle and images of the second side of the vehicle captured by means of the second side view camera may be displayed on the higher first display section of the assigned second display system.

According to an advantageous embodiment, the second display section at least partially overlaps the first display section. The advantageous embodiment may apply to the first display system and/or to the second display system. The advantageous embodiment may particularly apply to a display system with a single screen and electronically separated first and second display sections. For instance, the second display section may be embedded in or surrounded by the first display section. The second display section may advantageously overlap the first display section in a lower area or in an edge area of the first display system, such that the first display section is not covered in a potentially critical image area. Furthermore, the position of the second display section may be changed upon a suitable input by the driver, e.g. by touch and drag action on the screen. By presenting overlapping display sections, spatially concentrated image data may be provided to the driver. The distance between the first and second display sections may thus be minimized, resulting in less required eye or head movement of the driver. As a consequence, safety, effectiveness and comfort may be increased by the suggested embodiment.

According to an advantageous embodiment, the method further comprises:
- analyzing the images captured by the first side view camera and/or by the second side view camera by means of a digital image processing unit in order to determine a driving assistance condition for the first side of the vehicle and/or for the second side of the vehicle;
- generating an information representing the determined driving assistance condition for the first side of the vehicle and/or for the second side of the vehicle;
- displaying the images captured by the first side view camera and/or the information representing the driving assistance condition for the first side of the vehicle on the first display section of the first display system and/or on the second display section of the second display system; and
- displaying the images captured by the second side view camera and/or the information representing the driving assistance condition for the second side of the vehicle on the second display section of the first display system and/or on the first display section of the second display system.

By the suggested advantageous embodiment, individual driving assistance information may be provided for each vehicle side and assigned to a corresponding a display section. The images and/or the information may be selectively displayed collectively or alone on the associated display section, for instance depending on the driver's selection or depending on a type of the determined driving assistance condition or depending on other criteria, e.g. on a risk level of the determined driving assistance condition. Driving assistance conditions separately displayed for the associated vehicle side may enable the driver to perform a differentiated and assisted evaluation of the present driving situation. In addition or alternatively to the digital image processing, further or different sensor data may be analyzed in order to determine a driving assistance condition for the first side of the vehicle and/or for the second side of the vehicle, for instance it is conceivable to evaluate mechanical sensor data as e.g. provided by acceleration sensors or to evaluate acoustic sensor data as e.g. provided by vehicle microphones.

According to an advantageously refined embodiment, the driving assistance condition comprises at least one of the following conditions:
- time to collision;
- safe or collision status;
- lane change status;
- event detection;
- articulation angle.

The afore-mentioned conditions may be advantageously considered in a separate manner for the first side of the vehicle and the second side of the vehicle, thus enabling differentiated evaluations and reactions to present driving situations.

For instance, the time to collision may be calculated from a distance, a moving direction and/or a velocity of the vehicle and/or a detected collision-critical object. The displayed time to collision may assist the driver in estimating the time left to a potential collision and to take appropriate countermeasures as e.g. braking or steering. The displayed time to collision may comprise a visualization of the time to collision with a warning scale, e.g. using different warning colors for prompting an appropriate driver reaction. Indicators, in particular customizable indicators, may advantageously improve the driver's perception, e.g. by using simple icons or more detailed and comprehensive sets of information. According to advantageous embodiments, the information may be displayed with an optionally graded warning or braking recommendation only in case of a potential collision or the information may be also displayed to indicate objects which are located in a region of interest but do not represent a collision risk. If considered separately for the first and second sides of the vehicle, an adequate driver reaction may be beneficially promoted and adapted to the present side-dependent potential collision condition.

For instance, the safe or collision status may be calculated from a distance, a moving direction and/or a velocity of the vehicle and/or a detected collision-critical object. Compared to the time to collision condition the safe or collision status may rather refer to a collision risk grading or probability than to a time value. For instance, the safe or collision status may indicate whether an intended driving maneuver as e.g. a takeover or a turning can be performed in a sufficiently safe manner. The displayed safe or collision status may comprise a visualization of the collision evaluation with a warning scale, e.g. using different warning colors for prompting an appropriate driver reaction. Indicators, in particular customizable indicators, may advantageously improve the driver's perception, e.g. by using simple icons or more detailed and comprehensive sets of information. According to advantageous embodiments, the information may be displayed with an optionally graded warning or braking recommendation only in case of a potential collision or the information may be also displayed to indicate objects which are located in a region of interest but do not represent a collision risk. If considered separately for the first and second sides of the vehicle, an adequate driver reaction may be beneficially promoted and adapted to the present side-dependent potential collision condition.

For instance, the lane change status may be calculated from a distance, a moving direction, a lane selection and/or a velocity of the vehicle and/or at least one further road user, or a general traffic situation may be considered further involving traffic conditions as traffic jams or traffic lights. The lane change status may refer to navigational lane change or takeover situations. The displayed lane change status may assist the driver in estimating e.g. a probability of success or a collision risk regarding an intended lane change, for instance in connection with an intended takeover maneuver. Furthermore, a maneuver recommendation may be displayed, e.g. in order to prompt the driver to accelerate or to brake. Indicators, in particular customizable indicators, may advantageously improve the driver's perception, e.g. by using simple icons or more detailed and comprehensive sets of information. If considered separately for the first and second sides of the vehicle, an adequate driver reaction may be beneficially promoted and adapted to the present side-dependent lane traffic situation.

For instance, event detection may refer to automated electronical condition analysis and evaluation as e.g. provided by image processing comprising image or pattern recognition, or as e.g. automated evaluation of acoustic conditions in the vehicle environment. For instance, typical event patterns may be detected, optionally classified and signaled. Event detection as a driving assistance condition may, for instance, lead to providing a corresponding event information to the driver and/or to an appropriate recording action for refined real-time or subsequent analysis, for instance using an event detection recording (EDR) system. Indicators, in particular customizable indicators, may advantageously improve the driver's perception, e.g. by using simple icons or more detailed and comprehensive sets of information. If considered separately for the first and second sides of the vehicle, an adequate driver reaction may be beneficially promoted and adapted to the present side-dependent detected event.

For instance, the articulation angle may be calculated from a monitored angle between a towing part and a trailer part of the vehicle. Indicators, in particular customizable indicators, may advantageously improve the driver's perception, e.g. by using simple icons or more detailed and comprehensive sets of information. If it is detected that the articulation angle exceeds a predefined limit, for instance upon turning the vehicle, the side-dependent critical articulation angle may be advantageously visualized by means of the display systems in order to assist the driver.

According to a further aspect of the present invention, it is suggested to provide a driving assistance system for a vehicle, in particular for a commercial vehicle, the system comprising:
- a first side view camera configured to capture images on a first side of the vehicle;
- a second side view camera configured to capture images on a second side of the vehicle; and
- a first display system configured to be arranged within a vehicle cabin of the vehicle, the first display system being configured to receive images captured by the first side view camera and by the second side view camera;
wherein the first display system comprises a first display section configured to display the images captured by the first side view camera and wherein the first display system comprises a second display section configured to display the images captured by the second side view camera.

By the suggested driving assistance system, a combined side view display arrangement for first and second vehicle sides is provided which allows the driver to simultaneously or quasi-simultaneously perceive different vehicle side views from a single display system. By the first display system configured to jointly display the images captured by the first and second side view cameras, spatially concentrated image data is provided to the driver, thus enabling the driver to perform fast evaluation of the driving situation on the first and second vehicle sides with less eye or head movement. Hence, fast driver reactions to critical driving situations can be promoted, resulting in an improved safety level. The suggested driving assistance system may be particularly advantageous for driving situations requiring increased attention by the driver, as e.g. for overtaking maneuvers or reversing. Furthermore, as the first display system is arranged within the vehicle cabin, the images can be displayed close to the driver, thus facilitating perception of the displayed information. As a consequence, safety, effectiveness and comfort may be increased by the suggested driving assistance system.

The described driving assistance system may be particularly configured to perform the driving assistance method described above. The first display system may be connected to the first and second side view cameras by means of a suitable signal path, which may be provided by a wired or wireless signal connection. Optionally, the first display system may comprise or be connected to a suitable image processor for processing the captured images in a predefined manner. Furthermore, the first display system may comprise suitable attachment means, ports or electrical connectors for providing a suitable configuration which allows to simultaneously display the images captured by the first and second side view cameras by the first display system.

According to an advantageous embodiment, the driving assistance system further comprises:
- a second display system configured to be arranged within the vehicle cabin of the vehicle, the second display system being configured to receive images captured by the first side view camera and by the second side view camera;
wherein the second display system comprises a first display section configured to display the images captured by the second side view camera and wherein the first display system comprises a second display section configured to display the images captured by the first side view camera.

By this, a further display system is provided which beneficially improves the driver's overview. Thus, the driver may selectively use the first or second display system for image inspection. The described second display system may be configured equal or similar to the first display system.

According to advantageous embodiments, the first display system and/or the second display system comprise at least one of the following characteristics: the first display section comprises a larger display size compared to the second display section, the second display section is arranged under the first display section in the direction of gravity or the second display section at least partially overlaps the first display section.

According to an advantageous embodiment, the driving assistance system further comprises:
- a digital image processing unit configured to analyze the images captured by the first side view camera and/or by the second side view camera in order to determine a driving assistance condition for the first side of the vehicle and/or for the second side of the vehicle and further configured to generate an information representing the determined driving assistance condition for the first side of the vehicle and/or for the second side of the vehicle;

wherein the first display system is configured to display the images captured by the first side view camera and/or the information representing the driving assistance condition for the first side of the vehicle on the first display section of the first display system and to display the images captured by the second side view camera and/or the information representing the driving assistance condition for the second side of the vehicle on the second display section; and
wherein the second display system is configured to display the images captured by the second side view camera and/or the information representing the driving assistance condition for the second side of the vehicle on the first display section of the second display system and to display the images captured by the first side view camera and/or the information representing the driving assistance condition for the first side of the vehicle on the second display section.

By the suggested advantageous embodiment, individual driving assistance information may be provided for each vehicle side and assigned to a corresponding a display section. The first and second display systems may be configured to selectively display the images and/or the information collectively or alone on the associated display section. The digital image processing unit may, for instance, be configured to perform image recognition or pattern recognition or other suitable processing for object detection or event detection. Suitable examples for driving assistance conditions may be time to collision, safe or collision status, lane change status, event detection or articulation angle conditions as explained above with reference to the advantageous driver assistance method.

According to a further aspect of the invention, a vehicle is provided, in particular a commercial vehicle, comprising a driving assistance system according to at least one of the afore-mentioned characteristics. The described driving assistance system may be particularly configured to perform the driving assistance method described above. For commercial vehicles, the advantages of the disclosed driving assistance method and system may have an increased effect since commercial vehicles commonly comprise particular structures and dimensions which require increased driver attention for the vehicle environment and at the same time present challenging side view limitations due to their side lengths.

In the following, exemplary embodiments of the present disclosure will be described with reference to the accompanying schematic drawings. The figures are not necessarily to scale. Some features could be exaggerated or minimized to show details of particular components. Therefore, specific structural and functional details disclosed herein are not to be interpreted as limiting, but merely as a representative basis for teaching one skilled in the art.
- Fig. 1: schematically illustrates an example of a driving assistance system;
- Fig. 2: schematically illustrates an example of a driving assistance method;
- Fig. 3: depicts an example of a first display system and a second display system of the driving assistance system;
- Figs. 4a-4b: schematically illustrate a driving situation by a top view and associated time to collision information displayed by the first and second display systems;
- Figs. 5a-5b: schematically illustrate a driving situation by a top view and associated safe or collision information displayed by the first and second display systems;
- Figs. 6a-6b: schematically illustrate a driving situation by a top view and associated lane change status information displayed by the first and second display systems;
- Figs. 7a-7b: schematically illustrate a driving situation by a top view and associated event detection information displayed by the first and second display systems; and
- Figs. 8a-8b: schematically illustrate a driving situation by a top view and associated articulation angle information displayed by the first and second display systems.

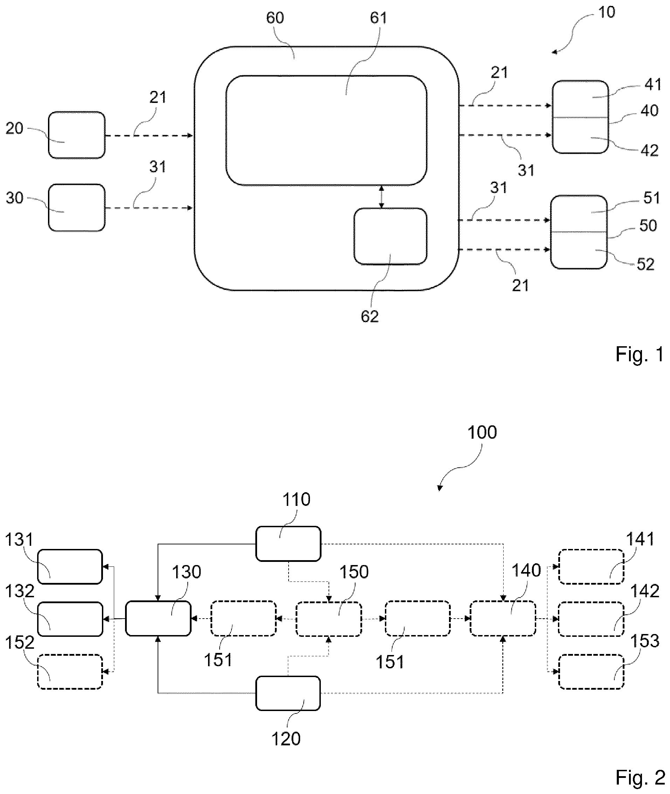

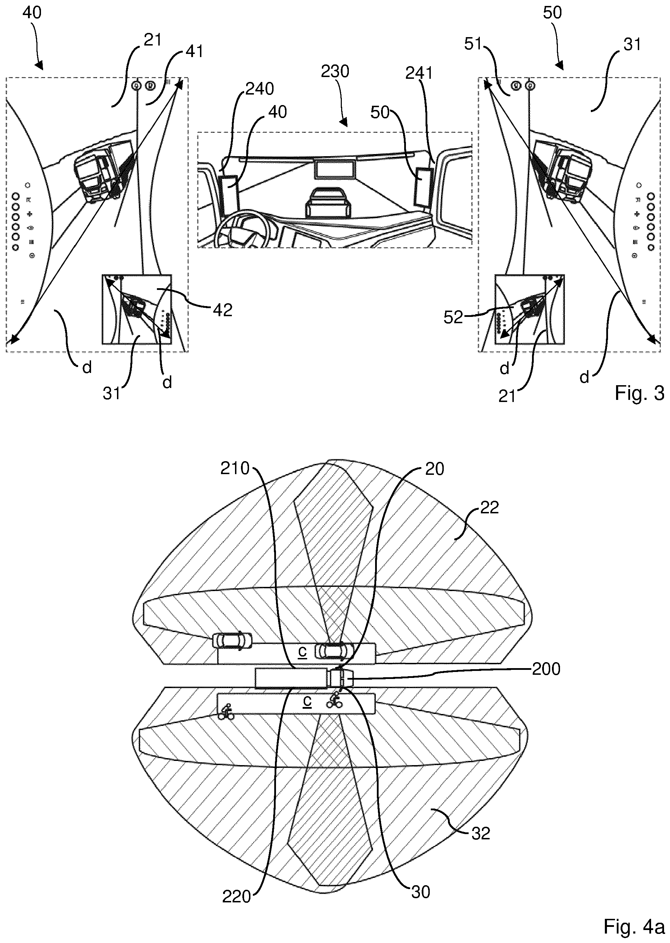

Fig. 1 schematically illustrates an example of a driving assistance system 10 for a vehicle 200, in particular for a commercial vehicle 200 as depicted for instance in Figs. 4a, 5a, 6a, 7a and 8a. The driving assistance system 10 comprises a first side view camera 20. The first side view camera 20 is configured to capture images 21 on a first side 210 of the vehicle 200. Furthermore, the driving assistance system 10 comprises a second side view camera 30. The second side view camera 30 is configured to capture images 31 on a second side 220 of the vehicle 200. According to the illustrated embodiment, the images 21 captured by the first side view camera 20 and the images 31 captured by the second side view camera 30 are received by a control unit 60 comprising a digital image processing unit 61 for further processing the received images 21, 31. The control unit 60 may further comprise a memory 62 for providing instructions to the digital image processing unit 61, for instance.

The driving assistance system 10 further comprises a first display system 40 with a first display section 41 and a second display section 42. The driving assistance system 10 further comprises a second display system 50 with a first display section 51 and a second display section 52. The first display system 40 and the second display system 50 may be arranged in vehicle cabin 230 of the vehicle 200, as depicted in Fig. 3. The first display system 40 and the second display system 50 are configured to receive images 21 captured by the first side view camera 20 and images 31 captured by the second side view camera 30. As schematically indicated, the first display system 40 is configured to display the images 21 captured by the first side view camera 20 on the first display section 41 and to display the images 31 captured by the second side view camera 30 on the second display section 42. As further schematically indicated, the second display system 50 is configured to display the images 31 captured by the second side view camera 30 on the first display section 51 and to display the images 21 captured by the first side view camera 20 on the second display section 52. By the suggested driving assistance system 10, a combined side view display arrangement for the first side 210 of the vehicle 200 and for the second side 220 of the vehicle 220 is provided which allows a driver of the vehicle 200 to perceive different vehicle side views as spatially concentrated image data, thus enabling the driver to perform fast evaluation of the driving situation on both vehicles sides 210, 220 with less eye or head movement. As a consequence, safety, effectiveness and comfort may be increased by the suggested driving assistance system 10. By the second display system 50, a further display system in addition to the first display system 40 is provided which advantageously enhances the driver's overview.

Fig. 2 schematically illustrates an example of a driving assistance method 100 for a vehicle 200, in particular for a commercial vehicle 200 as depicted for instance in Figs. 4a, 5a, 6a, 7a and 8a. The method 100 comprises providing a first side view camera 20 configured to capture images 21 on a first side 210 of the vehicle 200, as indicated by the block 110 in Fig. 2. The method 100 further comprises providing a second side view camera 30 configured to capture images 31 on a second side 220 of the vehicle 200, as indicated by the block 120. The method 100 further comprises providing a first display system 40 which is configured to receive images 21 captured by the first side view camera 20 and by the second side view camera 30, as indicated by the block 130. The method 100 further comprises displaying the images 21 captured by the first side view camera 20 on a first display section 41 of the first display system 40, as indicated by the block 131. The method 100 further comprises displaying the images 31 captured by the second side view camera 30 on a second display section 42 of the first display section 40, as indicated by the block 132. By the illustrated driving assistance method 100, the driver may benefit from a combined side view displaying technology which allows a driver of the vehicle 200 to perceive different vehicle side views as spatially concentrated image data, thus enabling the driver to perform fast evaluation of the driving situation on both vehicles sides 210, 220 with less eye or head movement. As a consequence, safety, effectiveness and comfort may be increased by the suggested driving assistance method 100.

The method 100 schematically illustrated in Fig. 2 further comprises optional method features indicated by dashed line blocks. For instance, the method 100 may further comprise providing a second display system 50 configured to receive images 21, 31 captured by the first side view camera 20 and by the second side view camera 30, as indicated by the block 140. The block 141 represents displaying the images 31 captured by the second side view camera 30 on a first display section 51 of the second display system 50. The block 142 represents displaying the images 21 captured by the first side view camera 20 on a second display section 52 of the second display system 50.

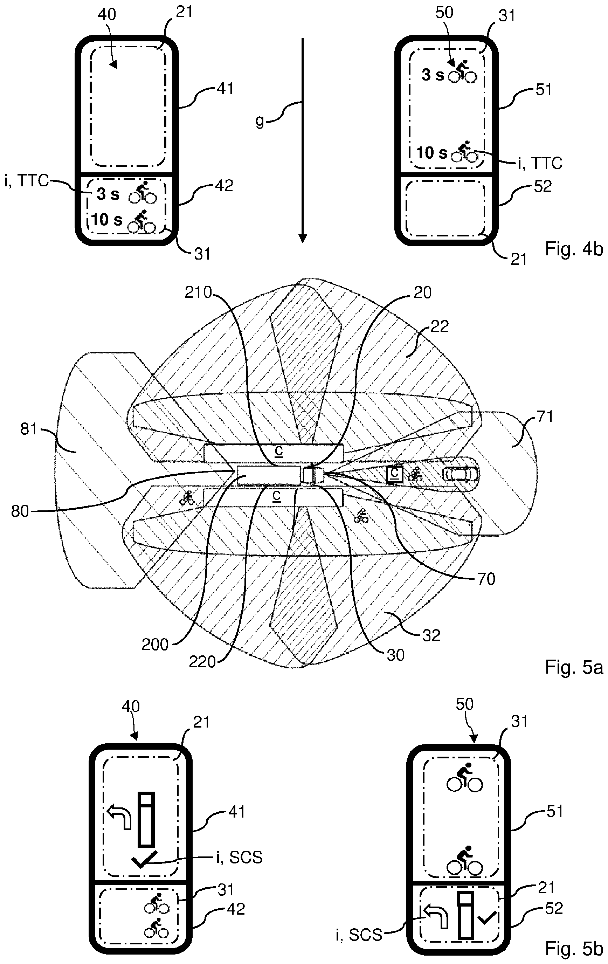

Furthermore, according to an optional feature of the method 100 indicated by the block 150, the images 21, 31 captured by the first side view camera 20 and/or by the second side view camera 30 may be analyzed by means of a digital image processing unit 61 in order to determine a driving assistance condition c schematically indicated in Figs. 4a, 5a, 6a, 7a and 8a for the first side 210 of the vehicle 200 and/or for the second side 220 of the vehicle 200. From the analysis, an information i schematically indicated in Figs. 4b, 5b, 6b, 7b and 8b may be generated as indicated by the block 151, which represents the determined driving assistance condition c for the first side 210 of the vehicle 200 and/or for the second side 220 of the vehicle 200. The information i may be displayed for the first side 210 of the vehicle 200, as indicated by the block 152, e.g. on the first display section 41 of the first display system 40 and/or on the second display section 52 of the second display system 50. The information i may be displayed for the second side 220 of the vehicle 200, as indicated by the block 153, e.g. on the first display section 51 of the second display system 50 and/or on the second display section 42 of the first display system 40. Examples of driving assistance conditions c will be further explained with reference to Figs. 4a to 8b.

Fig. 3 depicts an example of a first display system 40 and a second display system 50 of the driving assistance system 10 described with reference to Fig. 1. As indicated in the center of the drawing, the first display system 40 and the second display system 50 are arranged in a vehicle cabin 230 of the vehicle 200 and spaced apart. The first display system 40 is shown closer to a first side 210 of the vehicle 200, here a left side of the vehicle 200, and the second display system 50 is shown closer to a second side 220 of the vehicle 200, here a right side of the vehicle 200. The first display system 40 is arranged on a first A-pillar 240 of the vehicle 200 and the second display system 50 is arranged on a second A-pillar 241, thus facilitating to combine display inspection with respective window glances. As schematically indicated, the first display system 40 comprises electronically separated first and second display sections 41, 42 on a single screen and the second display system 50 comprises electronically separated first and second display sections 51, 52 on a single screen. On the first display section 41 of the first display system 40 and on the second display section 52 of the second display system 50, images 21 captured by the first side view camera 20 on the first side 210 of the vehicle 200 are displayed. On the first display section 51 of the second display system 50 and on the second display section 42 of the first display system 40, images 31 captured by the second side view camera 30 on the second side 220 of the vehicle 200 are displayed. Thus, the driver can for instance inspect the driving situation on the left side of the vehicle 200 in the left first display system 40 on the first display section 41 and the driving situation on the right side of the vehicle 200 in the left first display system 40 on the second display section 42, and vice versa with the second display system 50. As schematically indicated, the first display sections 41, 51 comprise a larger display size d represented by the display diagonal compared to the second display sections 42, 52, thus promoting the driver's focus and understanding for the displayed side view. Furthermore, the second display sections 42, 52 partially overlap the first display sections 41, 51 in a lower area of the first display sections 41, 51, thus providing spatially concentrated image data to the driver.

Fig. 4a schematically illustrates a driving situation by a top view on a driven vehicle 200. According to the depicted embodiment, the vehicle 200 is configured as a commercial vehicle 200, here as a truck with a towing part defining a front of the vehicle 200 and a trailer part ending with a rear of the vehicle 200. Commercial vehicles 200 as trucks often comprise challenging side view limitations due to their side lengths. Therefore, the present invention may be beneficially applicable for providing an improved overview for the driver. The first side view camera 20 and the second side view camera 30 may be advantageously mounted on the first side 210 and on the second side 220 of the vehicle 200 close to the front of the vehicle 200, thus providing suitable side views beneficially combined with rear views. As illustrated, the first side view camera 20 and the second side view camera 30 may comprise extensive fields of view 22, 32. As indicated, the first side 210 and the second side 220 of the vehicle 200 may in particular refer to lateral vehicle sides being opposite to each other and extending between the rear and the front of the vehicle.

The driving situation shown in Fig. 4a may be represented by driving assistance conditions c which may be captured as images 21, 31 by the side view cameras 20, 30 and analyzed by the digital image processing unit 61 as depicted in Fig. 1. By this, the driving assistance conditions c may be determined and an information i may be generated for the first side 210 of the vehicle 200 and for the second side 220 of the vehicle 200.

Fig. 4b schematically illustrates a first type of driving assistance condition c represented by a corresponding information i displayed by the first and second display systems 40, 50, wherein the first type of driving assistance condition c is a time to collision TTC. According to the depicted embodiment, the first display system 40 comprises structurally separated first and second display sections 41, 42 and the second display system 50 comprises structurally separated first and second display sections 51, 52. The second display sections 42, 52 are arranged under the first display sections 41, 51 in the direction of gravity g, thus promoting the driver's focus and understanding for the displayed side view. Referring back to Fig. 4a, two bicycles are schematically indicated traveling on the second side 220 of the vehicle 200. In Fig. 4b, the bicycles are indicated by icons and displayed with the calculated time to collision TTC for the second side 220 of the vehicle 200, which means the information i is given on the second display section 42 of the first display system 40 and on the first display section 51 of the second display system 50. Thus, the driver may easily correlate the provided information i with the associated second side 220 of the vehicle 200 regardless of which display system 40, 50 the driver is inspecting.

Fig. 5a schematically illustrates a further driving situation by a top view on the driven vehicle 200. The driving situation shown in Fig. 5a may be represented by driving assistance conditions c which may be captured as images 21, 31 by the side view cameras 20, 30. Furthermore, additional image data may be provided by an additional front camera 70 comprising a further field of view 71 and by an additional rear camera 80 comprising a further field of view 81. The images 20, 30 and the further image data may be analyzed by the digital image processing unit 61 as depicted in Fig. 1. By this, the driving assistance conditions c may be determined and an information i may be generated for the first side 210 of the vehicle 200 and for the second side 220 of the vehicle 200.

Fig. 5b schematically illustrates a second type of driving assistance condition c represented by a corresponding information i displayed by the first and second display systems 40, 50, wherein the second type of driving assistance condition c is a safe or collisions status SCS. According to the depicted embodiment, the first display system 40 comprises structurally separated first and second display sections 41, 42 and the second display system 50 comprises structurally separated first and second display sections 51, 52. Referring back to Fig. 5a, two bicycles are schematically indicated traveling on the second side 220 of the vehicle 200. In Fig. 5b, the bicycles are indicated by icons and displayed for the second side 220 of the vehicle 200, which means the information i is given on the second display section 42 of the first display system 40 and on the first display section 51 of the second display system 50. Furthermore, due to an absence of a potential collision object on the first side 210 of the vehicle 200, a positive safe or collision status SCS meaning a safe status for an intended turning is indicated as a further information i for the first side 210 of the vehicle 200, which means the information i is given on the first display section 41 of the first display system 40 and on the second display section 52 of the second display system 50. Thus, the driver may easily correlate the provided information i with the associated first side 210 and the second side 220 of the vehicle 200 regardless of which display system 40, 50 the driver is inspecting.

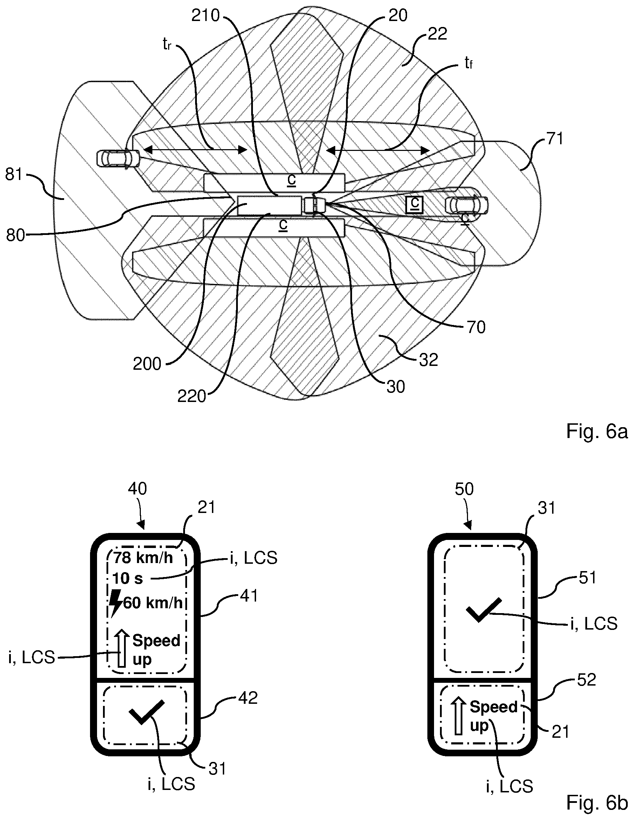

Fig. 6a schematically illustrates a further driving situation by a top view on the driven vehicle 200. The driving situation shown in Fig. 6a may be represented by driving assistance conditions c which may be captured as images 21, 31 by the side view cameras 20, 30. Furthermore, additional image data may be provided by an additional front camera 70 comprising a further field of view 71 and by an additional rear camera 80 comprising a further field of view 81. The images 20, 30 and the further image data may be analyzed by the digital image processing unit 61 as depicted in Fig. 1. By this, the driving assistance conditions c may be determined and an information i may be generated for the first side 210 of the vehicle 200 and for the second side 220 of the vehicle 200.

Fig. 6b schematically illustrates a third type of driving assistance condition c represented by a corresponding information i displayed by the first and second display systems 40, 50, wherein the third type of driving assistance condition c is a lane change status LCS. According to the depicted embodiment, the first display system 40 comprises structurally separated first and second display sections 41, 42 and the second display system 50 comprises structurally separated first and second display sections 51, 52. Referring back to Fig. 6a, an approaching road user on the adjacent lane and a further road user travelling in front of the vehicle 200 are schematically indicated, such that the driver may appreciate assistance in evaluating the chances and risks of a takeover. In Fig. 6b, a safe lane change status on the second side 220 of the vehicle 200 is indicated by a suitable icon and displayed for the second side 220 of the vehicle 200, which means the information i is given on the second display section 42 of the first display system 40 and on the first display section 51 of the second display system 50. Furthermore, a lane change status LCS recommendation e.g. with a speed of the vehicle 200, a time tr to overtake to front or a time tᵣ to overtake to rear, a speed of the leading road user and a reaction prompt may be displayed for the first side 210 of the vehicle 200, which means the information i is given on the first display section 41 of the first display system 40 and on the second display section 52 of the second display system 50. Thus, the driver may easily correlate the provided information i with the associated first side 210 and the second side 220 of the vehicle 200 regardless of which display system 40, 50 the driver is inspecting.

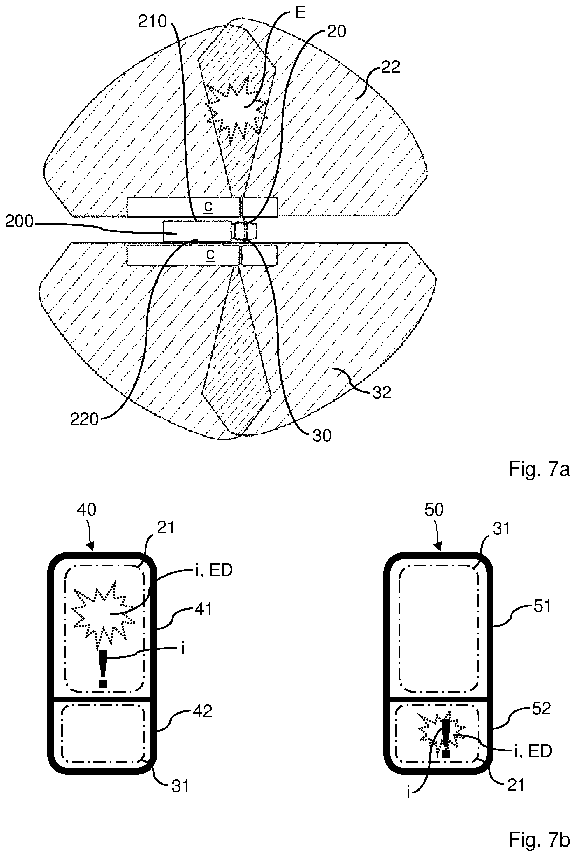

Fig. 7a schematically illustrates a further driving situation by a top view on the driven vehicle 200. The driving situation shown in Fig. 7a may be represented by driving assistance conditions c which may be captured as images 21, 31 by the side view cameras 20, 30. The images 20, 30 may be analyzed by the digital image processing unit 61 as depicted in Fig. 1. By this, the driving assistance conditions c may be determined and an information i may be generated for the first side 210 of the vehicle 200 and for the second side 220 of the vehicle 200.

Fig. 7b schematically illustrates a fourth type of driving assistance condition c represented by a corresponding information i displayed by the first and second display systems 40, 50, wherein the fourth type of driving assistance condition c corresponds to an event detection ED. According to the depicted embodiment, the first display system 40 comprises structurally separated first and second display sections 41, 42 and the second display system 50 comprises structurally separated first and second display sections 51, 52. Referring back to Fig. 7a, an event E as e.g. an accident on the first side 210 of the vehicle 200 is schematically indicated, such that the driver may appreciate event detection ED as well as event recording and displaying. In Fig. 7b, the event E on the first side 210 of the vehicle 200 is indicated by a suitable icon and optionally replayed for the first side 210 of the vehicle 200, which means the information i is given on the first display section 41 of the first display system 40 and on the second display section 52 of the second display system 50. Thus, the driver may easily correlate the provided information i with the associated first side 210 and the second side 220 of the vehicle 200 regardless of which display system 40, 50 the driver is inspecting.

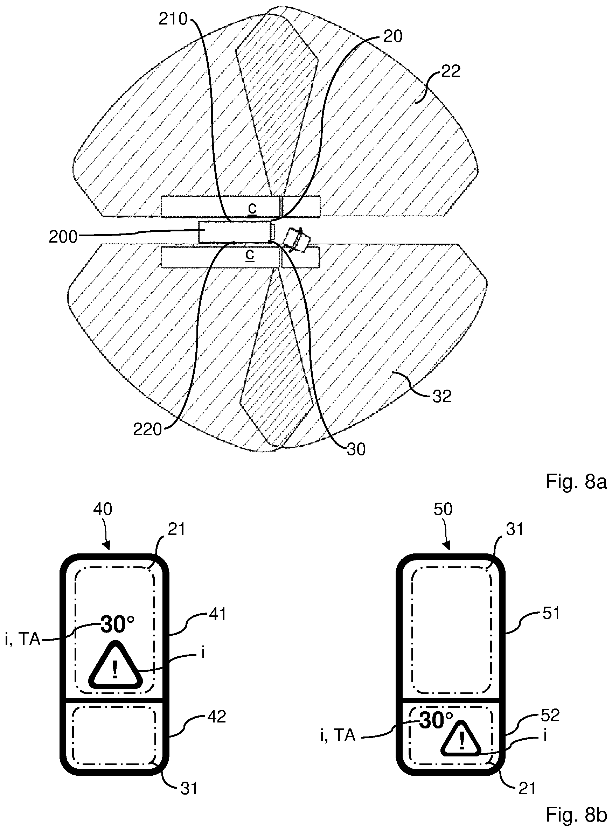

Fig. 8a schematically illustrates a further driving situation by a top view on the driven vehicle 200. The driving situation shown in Fig. 8a may be represented by driving assistance conditions c which may be captured as images 21, 31 by the side view cameras 20, 30. The images 20, 30 may be analyzed by the digital image processing unit 61 as depicted in Fig. 1. By this, the driving assistance conditions c may be determined and an information i may be generated for the first side 210 of the vehicle 200 and for the second side 220 of the vehicle 200.

Fig. 8b schematically illustrates a fifth type of driving assistance condition c represented by a corresponding information i displayed by the first and second display systems 40, 50, wherein the fifth type of driving assistance condition c corresponds to a articulation angle TA. According to the depicted embodiment, the first display system 40 comprises structurally separated first and second display sections 41, 42 and the second display system 50 comprises structurally separated first and second display sections 51, 52. Referring back to Fig. 8a, a critical articulation angle TA on the first side 210 of the vehicle 200 is schematically indicated, such that the driver may appreciate indication of the critical articulation angle TA. In Fig. 8b, the critical articulation angle on the first side 210 of the vehicle 200 is indicated by a suitable icon for the first side 210 of the vehicle 200, which means the information i is given on the first display section 41 of the first display system 40 and on the second display section 52 of the second display system 50. Thus, the driver may easily correlate the provided information i with the associated first side 210 and the second side 220 of the vehicle 200 regardless of which display system 40, 50 the driver is inspecting.

By the suggested advantageous embodiments according to Figs. 4a to 8b, individual driving assistance information i may be provided for the first and second sides 210, 220 of the vehicle 200 and assigned to a corresponding display section 41,42, 51, 52, thus allowing for improved perception and evaluation of driving situations.

### List of reference numerals (part of the application)

- 10: driving assistance system
- 20: first side view camera
- 21: first side view camera image
- 22: field of view first side view camera
- 30: second side view camera
- 31: second side view camera image
- 32: field of view second side view camera
- 40: first display system
- 41: first display section of first display system
- 42: second display section of first display system
- 50: second display system
- 51: first display section of second display system
- 52: second display section of second display system
- 60: control unit
- 61: digital image processing unit
- 62: memory
- 70: front camera
- 71: field of view front camera
- 80: rear camera
- 81: field of view rear camera
- 100: driving assistance method
- 110: providing first side view camera
- 120: providing second side view camera
- 130: providing a first display system
- 131: displaying on first display section of first display system
- 132: displaying on second display section of first display system
- 140: providing a second display system
- 141: displaying on first display section of second display system
- 142: displaying on second display section of second display system
- 150: analyzing images
- 151: generating information
- 152: displaying information for the first side of the vehicle
- 153: displaying information for the second side of the vehicle
- 200: vehicle
- 210: first side of the vehicle
- 220: second side of the vehicle
- 230: vehicle cabin
- 240: first A-pillar
- 241: second A-pillar
- c: driving assistance condition
- d: display size
- E: event
- ED: event detection
- g: direction of gravity
- i: information representing c
- LCS: lane change status
- SCS: safe or collision status
- TA: articulation angle
- TTC: time to collision
- tr: time to overtake to front
- tᵣ: time to overtake to rear

## Claims

1. A driving assistance method (100) for a vehicle (200), in particular for a commercial vehicle (200), comprising:
- providing a first side view camera (20) configured to capture images (21) on a first side (210) of the vehicle (200) (110);
- providing a second side view camera (30) configured to capture images (31) on a second side (220) of the vehicle (200) (120);
- providing a first display system (40) arranged within a vehicle cabin (230) of the vehicle (200), the first display system (40) being configured to receive images (21, 31) captured by the first side view camera (20) and by the second side view camera (30) (130);
- displaying the images (21) captured by the first side view camera (20) on a first display section (41) of the first display system (40) (131); and
- displaying the images (31) captured by the second side view camera (30) on a second display section (42) of the first display system (40) (132).

2. The method (100) according to claim 1, wherein the method (100) further comprises:
- providing a second display system (50) arranged within the vehicle cabin (230), the second display system (50) being configured to receive images (21, 31) captured by the first side view camera (20) and by the second side view camera (30) (140);
- displaying the images (31) captured by the second side view camera (30) on a first display section (51) of the second display system (50) (141); and
- displaying the images (21) captured by the first side view camera (20) on a second display section (52) of the second display system (50) (142).

3. The method (100) according to claim 1 or 2, wherein the first display section (41, 51) comprises a larger display size (d) compared to the second display section (42, 52).

4. The method (100) according to any preceding claim, wherein the second display section (42, 52) is arranged under the first display section (41, 51) in the direction of gravity (g).

5. The method (100) according to any preceding claim, wherein the second display section (42, 52) at least partially overlaps the first display section (41, 51).

6. The method (100) according to any preceding claim, wherein the method (100) further comprises:
- analyzing the images (21, 31) captured by the first side view camera (20) and/or by the second side view camera (30) by means of a digital image processing unit (61) in order to determine a driving assistance condition (c) for the first side (210) of the vehicle (200) and/or for the second side (220) of the vehicle (200) (150);
- generating an information (i) representing the determined driving assistance condition (c) for the first side (210) of the vehicle (200) and/or for the second side (220) of the vehicle (200) (151);
- displaying the images (21) captured by the first side view camera (20) and/or the information (i) representing the driving assistance condition (c) for the first side (210) of the vehicle (200) on the first display section (41) of the first display system (40) and/or on the second display section (52) of the second display system (50) (152); and
- displaying the images (31) captured by the second side view camera (30) and/or the information (i) representing the driving assistance condition (c) for the second side (220) of the vehicle (200) on the second display section (42) of the first display system (40) and/or on the first display section (51) of the second display system (50) (153).

7. The method (100) according to claim 6, wherein the driving assistance condition (c) comprises at least one of the following conditions:
- time to collision (TTC);
- safe or collision status (SCS);
- lane change status (LCS);
- event detection (ED);
- articulation angle (TA).

8. A driving assistance system (10) for a vehicle (200), in particular for a commercial vehicle (200), comprising:
- a first side view camera (20) configured to capture images (21) on a first side (210) of the vehicle (200);
- a second side view camera (30) configured to capture images (31) on a second side (220) of the vehicle (200); and
- a first display system (40) configured to be arranged within a vehicle cabin (230) of the vehicle (200), the first display system (40) being configured to receive images (21, 31) captured by the first side view camera (20) and by the second side view camera (30);
wherein the first display system (40) comprises a first display section (41) configured to display the images (21) captured by the first side view camera (20) and wherein the first display system (40) comprises a second display section (42) configured to display the images (31) captured by the second side view camera (30).

9. The driving assistance system (10) according to claim 8, further comprising:
- a second display system (50) configured to be arranged within the vehicle cabin (230), the second display system (50) being configured to receive images (21, 31) captured by the first side view camera (20) and by the second side view camera (30);
wherein the second display system (50) comprises a first display section (51) configured to display the images (31) captured by the second side view camera (30) and wherein the first display system (50) comprises a second display section (52) configured to display the images (21) captured by the first side view camera (20).

10. The driving assistance system (10) according to claim 8 or 9, further comprising:
- a digital image processing unit (61) configured to analyze the images (21, 31) captured by the first side view camera (20) and/or by the second side view camera (30) in order to determine a driving assistance condition (c) for the first side (210) of the vehicle (200) and/or for the second side (220) of the vehicle (200) and further configured to generate an information (i) representing the determined driving assistance condition (c) for the first side (210) of the vehicle (200) and/or for the second side (220) of the vehicle (200);
wherein the first display system (40) is configured to display the images (21) captured by the first side view camera (20) and/or the information (i) representing the driving assistance condition (c) for the first side (210) of the vehicle (200) on the first display section (41) of the first display system (40) and to display the images (31) captured by the second side view camera (30) and/or the information (i) representing the driving assistance condition (c) for the second side (210) of the vehicle (200) on the second display section (42); and
wherein the second display system (50) is configured to display the images (31) captured by the second side view camera (30) and/or the information (i) representing the driving assistance condition (c) for the second side (210) of the vehicle (200) on the first display section (51) of the second display system (50) and to display the images (21) captured by the first side view camera (20) and/or the information (i) representing the driving assistance condition (c) for the first side (210) of the vehicle (200) on the second display section (52).

11. A vehicle (200), in particular a commercial vehicle (200), comprising a driving assistance system (10) according to any one of claims 8 to 10.
